# EUROPEAN PATENT SPECIFICATION

(11) **EP 0 479 485 B1**
(45) Date of publication and mention of the grant of the patent: **01.03.1995**
(21) Application number: 91308759.9
(22) Date of filing: 25.09.1991
(51) Int. Cl.: C04B 35/58

(54) **Sialon type sintered bodies**
Sinterkörper des Typs Sialon
Corps frittes de type Sialon

(30) Priority: 25.09.1990 JP 254656/90; 10.06.1991 JP 137549/90
(43) Date of publication of application: 08.04.1992
(73) Proprietor: KABUSHIKI KAISHA TOSHIBA, Kawasaki-shi, Kanagawa-ken 210 (JP)
(72) Inventor: Asayama, Masahiro, c/o Intellectual Property Div., Minato-ku, Tokyo (JP); Komatsu, Michiyasu, c/o Intellectual Property Div., Minato-ku, Tokyo (JP); Kameda, Tsuneji, c/o Intellectual Property Div., Minato-ku, Tokyo (JP); Sayano, Akio, c/o Intellectual Property Division, Minato-ku, Tokyo (JP)
(74) Representative: March, Gary Clifford

(56) References cited:
- EP-A- 0 397 525
- US-A- 4 816 428
- US-A- 4 816 428
- CHEMICAL ABSTRACTS, vol. 102, no. 22, 3 June 1985, Columbus, Ohio, US; abstract no. 189759T, MITSUBISHI METAL KK: 'Abrasion-resistant Sialon-based ceramics'

## Description

The present invention relates to ceramic sintered bodies whose main component is a sialon with high fracture toughness value and their production.

Sialon type sintered bodies whose main component is Si-Al-O-N have excellent characteristics, such as small coefficient of thermal expansion, high heat resistance, high acid resistance, and high erosion resistance. The sialon type sintered bodies have been used as structural materials including Si₃N₄ sintered bodies, SiC group sintered bodies, and so forth.

CHEMICAL ABSTRACTS, vol. 102, no. 22, June 1985, abstract no. 189759t, & JP-A-59232971 (MITSUBISHI METAL CORP.) describes the preparation of ceramics containing mainly beta- and alpha-Sialon, but also 1-40 vol.% ZrO₂ and/or HfO₂ for improving e.g. pressureless sintering and abrasion resistance and 1-20 vol.% of a binder phase selected from oxides and nitrides.

US-A-4816428 describes a process for producing heat-resisting beta-Sialon - silicon carbide - composites having high strength using as starting material a mixture of e.g. 10 wt. % of alumina (added as a solution of e.g. aluminium isopropoxide) and 20 wt. % silicon carbide added to silicon nitride.

EP-A-0397525, cited in the search report under Article 54(3), describes sialon based composites consisting of e.g. β prime sialon composition, 3 wt.% hafnium oxide and 5, 10 or 15 wt.% of SiC whisker.

Sialon type sintered bodies also exhibit small degradation of strength in high temperature ranges and higher acid resistance than the Si₃N₄ group sintered bodies. On the other hand, sialon type sintered bodies have the disadvantage of lower reliability as a structural material than the Si₃N₄ group sintered bodies. To improve the reliability of the sialon type sintered bodies, particles which are not solid solved in a sialon type sintered body, for example, particles of SiC, have been dispersed therein. An object of this attempt was to improve the fracture toughness value by a complex effect with dispersed particles.

The sialon type sintered bodies in which different particles, such as SiC, are dispersed and contained can be produced by adding such particles as SiC to powder satisfying a sialon composition (hereinafter named sialon powder). However, when different particles such as SiC are added to sialon powder, the sintering characteristic of the sialon powder is substantially degraded. Thus, so far, when a non-pressurised sintering method such as sintering at normal pressure was used, at most around 5 parts by weight of SiC as dispersed particles could be added per 100 parts by weight of sialon powder. If more parts of SiC were added, sintered bodies could not be constructed with high density by non-pressurised sintering. Thus, so far, the effect of improving the fracture toughness value by using dispersed particles was not satisfactorily accomplished.

On the other hand, by using a hot press method, it is possible to add about 50 parts by weight of SiC particles per 100 parts by weight of sialon powder. However, the hot press method has the following disadvantages.

When the hot press method is used, the shapes of products are limited to simple ones. In addition, the hot press method is not suitable for mass production due to high production costs. Moreover, even if the hot press method is used, the fracture toughness value obtained may be unacceptable. Furthermore, even if the HIP or similar method is used, substantial improvements in characteristics may not be achieved.

In comparison with the hot press method, a non-pressurised sintering method has advantages in more freedom of shapes of sintered bodies, low production costs, and suitability for mass production. Thus, it has been desirable to provide sialon type sintered bodies with high fracture toughness by using a non-pressurised sintering method.

Therefore, an object of the present invention is to provide sialon type sintered bodies having high density and high fracture toughness, the sintered bodies capable of production by a non-pressurised sintering process susceptible to mass production . In addition, a further object of the present invention is to provide a method of producing sialon type sintered bodies with high density and high fracture toughness by such non-pressurised sintering methods suitable for mass production.

A sialon sintered body according to the present invention comprises a primary phase containing in an amount of 90% or more by volume of said primary phase a sialon composition which consists of β-prime sialon, and a dispersion phase dispersed within the primary phase, the dispersion phase comprising 1 to 60 parts by weight of hafnium oxide and 5 to 30 parts by weight of silicon carbide per 100 parts by weight of the primary phase.

In addition, a sialon the sintered body according to the present invention may comprise a mixture of 1 to 60 parts by weight of hafnium oxide, 5 to 30 parts by weight of silicon carbide, and 100 parts by weight of silicon nitride containing 2.5 % to 20 % by weight of aluminum oxide which has been moulded and sintered.

Moreover, a preferred method of producing sialon type sintered bodies according to the present invention comprises the steps of mixing 1 to 60 parts by weight of hafnium oxide powder and 5 to 30 parts by weight of silicon carbide powder with 100 parts by weight of silicon nitride powder containing 2.5 to 20 % by weight of aluminum oxide powder,moulding the mixture powder into a desired shape, and sintering the resultant moulded body in a non-pressurised, (i.e. pressure-free) atmosphere.

The primary phase of the sintered bodies according to the present invention substantially satisfies the sialon composition. In other words, when 90 % or more by volume of the primary phase are the sialon, the effects of the present invention can be obtained. The primary phase may contain a secondary phase of around several % by weight of glass phase or the like besides the sialon phase. Thus, starting material for obtaining or comprising the primary phase may not always and strictly satisfy the sialon composition. However, with respect to the characteristics of the sialon, the starting material preferably does not contain a glass or similar phase.

The sialons can be categorized as β prime sialon composition and α prime sialon composition. The primary phase of ceramic sintered bodies according to the present invention is the β prime sialon which can be substantially represented by the formula: Si_{6-z} Al_{z} O_{z} N_{8-z} (where 0 < z ≦ 4.2).

The sialon type sintered bodies according to the present invention are preferably particle dispersed type where the above mentioned primary phase contains hafnium oxide and silicon carbide which are dispersed therein. Hafnium oxide and silicon carbide are not solid soluble in crystalline particles of the sialon. Thus, hafnium oxide and silicon carbide are present independently in the structure of sintered bodies and form a dispersion phase.

Hafnium oxide functions as a sintering assisting - agent for sialon type sintered bodies containing silicon carbide. In other words, in the sintering process, hafnium oxide becomes a liquid phase and promotes sintering in the liquid phase, thereby contributing to high density of the sintered bodies. After the sintering process, hafnium oxide is present independently in the structure of the sintered body as a dispersion phase. When a Known sintering assisting agent such as yttrium oxide is used, it is present in the sintered body as a glass phase. A glass phase however degrades strength of sialon type sintered bodies at high temperature.

High strength at high temperature is a known desirable characteristic of sialon type sintered bodies. It has suprisingly been found that hafnium oxide does not degrade this high temperature characteristic. In addition, hafnium oxide has been found to contribute to improving the mechanical strength of sintered bodies, when present as dispersed particles. Particles of have been found hafnium oxide have been found present at the triple point of the sialon crystalline particles and at the interface between the sialon cristalline particles and the silicon carbide particles.

Even for composition wherein silicon carbide is added, hafnium oxide readily contributes to high density sintering thereof. Thus, a relatively large amount of silicon carbide can be added to sialon type sintered bodies. In addition, the present sintering assisting agent does not degrade the high temperature characteristic. The amount of hafnium oxide added is 1 to 60 parts by weight per 100 parts by weight of the above mentioned primary phase. If the amount of hafnium oxide added is less than 1 part by weight, the sialon sintered bodies may not have sufficiently high density. In contrast, if the amount of hafnium oxide added exceeds 60 parts by weight, this may degrade sintering characteristics and increase specific gravity. The amount of hafnium oxide added is preferably 5 to 50 parts by weight, more preferably 10 to 30 parts by weight. The amount of hafnium oxide to be added may be conveniently determined in accordance with the amount of silicon carbide to be added for reasons described subsequently.

Silicon carbide has been found to be present independently in a particle state in the structure of sialon type sintered bodies. Thus, silicon carbide forms a dispersion phase in sialon type sintered bodies. Such a dispersion phase improves fracture toughness and mechanical strength. During cooling after sintering, a residual stress field is formed at the periphery of the silicon carbide particles. This residual stress field prevents further cracking. Thus, the fracture toughness value of sialon type sintered bodies is improved. The mechanical strength is also improved. Silicon carbide which is present in the primary phase is in normal particle state, the average particle diameter is preferably 50 »m or less.

Thus, when hafnium oxide is added, it is possible to add a large amount of silicon carbide to the primary phase, namely, 5 to 30 parts by weight of silicon carbide per 100 parts by weight of the primary phase. The fracture toughness of the sialon the sintered bodies can be remarkably improved when the amount of silicon carbide added exceeds around 5 parts by weight per 100 parts by weight of the primary phase. However, when the amount of silicon carbide added exceeds 30 parts by weight, even if hafnium oxide is also added, it becomes difficult to obtain sintered bodies of sufficiently high density.

When a large amount of hafnium oxide is added simultaneously with a large amount of silicon carbide, the particles of hafnium oxide grow and thereby occasionally forming a large particle aggregate with a diameter of around 150 »m. Since giant particles of hafnium oxide tend to be deformed at a high temperature, they may degrade the high temperature characteristics of the sintered bodies. The degradation of the high temperature characteristic by giant articles of hafnium oxide can be suppressed by using at least one of the possible modifications (a) and (b) as follows;
(a) by dispersing part of the silicon carbide particles in hafnium oxide particles and/or
(b) by coating the periphery of silicon carbide with hafnium oxide.

In the structure (a), a part of silicon carbide particles is dispersed in giant hafnium oxide particles which are formed by addition in large quantities. The silicon carbide particles can prevent the giant hafnium oxide particles from being dislocated at a high temperature. In other words, the residual stress field formed at the periphery of the silicon carbide particles reinforces the hafnium oxide particles themselves. Thus, the high temperature characteristics of the sialon type sintered bodies can be prevented from being degraded. The disadvantage resulting from the giant hafnium oxide particles can be solved in the above mentioned manner. However, when the hafnium oxide particles become too large, the uniformity of the structure of the sintered bodies is degraded. Thus, the size of the hafnium oxide particles is preferably at most about 500 »m.

In the structure (b), the hafnium oxide particles are concentrated at the periphery of the silicon carbide particles in the sintering process so as to suppress the formation of an aggregate of the giant hafnium oxide particles. Thus, the high temperature characteristic of the sialon type sintered bodies can be prevented from being degraded. In addition, when the periphery of the silicon carbide particles is coated with hafnium oxide, the degradation of the sintering characteristic caused by silicon carbide can be further suppressed. Thus, it is possible to further add silicon carbide in large quantities. For example, it becomes possible to add around 40 parts by weight of silicon carbide to 100 parts by weight of the primary phase. The hafnium oxide present at the periphery of the silicon carbide particles may be in a film state or of an aggregate of particles. The thickness of the hafnium oxide is preferably 10 »m or less. when the thickness of the hafnium oxide exceeds 10 »m, the residual stress field formed at the periphery of the silicon carbide particles is absorbed by the hafnium oxide layer and thereby the adding effect of silicon carbide cannot be satisfactorily obtained.

The sialon type sintered bodies according to the present invention can be produced for example in the following manner.

First, around 2.5 % to 20 % by weight of Al₂O₃ powder are added to Si₃N₄ powder to prepare a starting material for the primary phase which almost satisfies the β prime sialon composition. Al₂O₃ is solid solved in Si₃N₄ and thereby a sialon is formed. When the amount of Al₂O₃ added exceeds 20 % by weight, the strength of the sintered body degrades and thereby the amount of a secondary phase such as a grain boundary phase increases. In contrast, when the amount of Al₂O₃ added is less than 2.5 % by weight, it becomes difficult to obtain the sintered body with high density. The most suitable amount of Al₂O₃ to be added is of the order 10 % by weight.

The starting material for the primary phase which can be used is not limited to the above mentioned powder. Further, it is possible to use for example Si₃N₄ - Al₂O₃ - AlN type, Si₃N₄ - AlN - SiO₂ type, and commercially available synthesized β prime sialon powder. However, when the Si₃N₄ - Al₂O₃ type is used, the effect of fineness of the crystalline particles and the like can be obtained. Thus, the mixed powder of the above mentioned two groups has a higher improvement effect of the characteristic than synthesized β prime sialon powder and mixed powder satisfying the normal β prime sialon composition. In addition, since the β prime sialon phase is formed only with Al₂O₃ , water can be used as a dispersing medium.

Thereafter, predetermined amounts of HfO₂ and SiC are added to the starting material for the primary phase and then adequately mixed to prepare material powder of a sintered body.

The starting material of HfO₂ is preferably fine powder with an average particle diameter of 2 »m or less. The starting material of HfO₂ is more preferably fine powder with an average particle diameter of 1 »m or less. By using such fine powder, the uniformly dispersing characteristic of HfO₂ is improved. To further improve the dispersing characteristic of HfO₂ , as a starting material of HfO₂, an organic compound which contains hafnium and which is liquid at normal temperature can be effectively used. In the liquid organic compound containing hafnium, hafnium is uniformly present in the arterial powder. Thus, the effect of hafnium oxide can be effectively and uniformly accomplished. In addition, deviation among production lots can be substantially decreased. Moreover, since hafnium oxide can be uniformly dispersed, the amount thereof to be added can be decreased. Thus, the formation of an aggregate of giant particles of hafnium oxide can be suppressed.

Examples of the organic compounds which contain hafnium and are liquid at normal temperature include alkoxides of hafnium such C₄ or lower alkoxides e.g. hafnium tetramethoxide, hafnium tetraethoxide, and hafnium tetrabutoxide. In the sintering process, such organic compounds are converted to hafnium oxide. When an organic compound which contains hafnium and which is liquid at normal temperature is used, the adding amount of the organic compound should be based upon the amount required to form the desired quantity of hafnium oxide.

When an organic compound which contains hafnium and which is liquid at normal temperature is used as a starting material for the required hafnium oxide, an advantage can be obtained not only in the production process of sialon type sintered bodies, but also in that of silicon nitride type sintered bodies. For example, when silicon nitride group sintered bodies are produced, hafnium oxide can thereby be used as a sintering assisting agent. In this case, an organic compound which contains hafnium and which is liquid at normal temperature can be used as a starting material for the required hafnium oxide. An example of a mixture of materials for making silicon nitride group sintered bodies is described in the following. Oxide(s) of rare earth element(s) such as yttrium oxide, and aluminum nitride as sintering assisting agents are added and mixed with silicon nitride powder. 1 to 15 parts by weight of the sintering assisting agents are preferably added to 100 parts by weight of silicon nitride. Thereafter, the organic compound which contains hafnium and which is liquid at normal temperature is added to the resultant mixture to prepare a material mixture.

The SiC starting material is in a particle state. If the size of the particles is too large, a defect takes place thereby occasionally degrading the machanical strength of the sintered body. Thus, it is preferable to use SiC with an average particle diameter of 50 »m or less and with a maximum particle diameter of 100 »m or less.

Thereafter, the above mentioned material powder is moulded into a desirable shape by a known moulding method such as a press moulding method. Thereafter, the moulded body is sintered in a non-pressurised inert gas atmosphere at a temperature of 1700°C to 1900°C. Thereby, a sialon type sintered body according to the present invention can be obtained.

In addition, the above mentioned structure (a) can be obtained by satisfying the following conditions. First, the ratio between hafnium oxide and silicon carbide is properly determined. Then, the rate of temperature increase is adjusted. After the sintering process, the materials are heated at a temperatures lower than the sintering temperature. Thereby, the silicon carbide particles can be dispersed in the hafnium oxide particles. By adjusting the rate of temperature increase, the particle growing speed of hafnium oxide can be controlled. In the heating process after the sintering process, while the silicon carbide particles are dispersed, the hafnium oxide particles can be grown. The ratio of hafnium oxide to silicon carbide added (ratio by weight) is preferably for example 2:1 to 1:2.

The above mentioned structure (b) can be obtained by using for example silicon carbide having a particular amount of oxide layer on the surface thereof. With this silicon carbide, a hafnium oxide layer can be readily formed at the periphery of silicon carbide. In this case, the amount of oxygen on the surface is preferably detemined so that the amount of free SiO₂ is in the range from around 0.2 % to around 2.0 %. In addition, by properly setting the sintering temperature and the amount of hafnium oxide, the hafnium oxide layer can be readily formed at the periphery of the silicon carbide particles. The ratio of hafnium oxide to silicon carbide (ratio by weight) is also preferably for example 1:2 to 2:1.

The sialon type sintered bodies according to the present invention can be constructed with high density and have high fracture toughness by non-pressurised sintering methods. However, it should be understood that the advantageous characteristics of sialon type sintered bodies according to the present invention can be obtained with other sintering methods such as by atmospheric pressure sintering, hot press methods, and hot isostatic pressure sintering methods (HIP).

In order that the invention may be illustrated and more easily understood, embodiments thereof will now be described by way of non-limiting example only, and with reference to the accompanying electron photomicrograph in which:

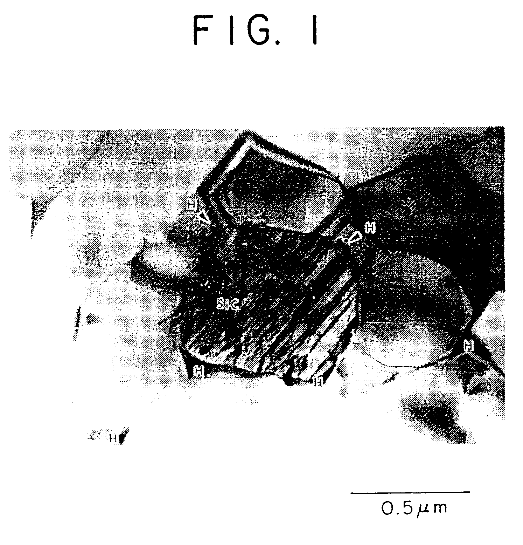

Fig. 1 is a photo taken by a transmission type electron microscope, showing the structure of a sialon type sintered body produced in accordance with an embodiment of the present invention.

### Embodiment 1

First, 2.5 % by weight of Al₂O₃ powder with an average particle diameter of 0.9 »m were added and mixed with Si₃N₄ powder with an average particle diameter of 0.7 »m so as to prepare a starting material for a primary phase. Thereafter, 5 parts by weight of HfO₂ powder with an average particle diameter of 0.9 »m and 5 parts by weight of SiC powder with an average particle diameter of 0.5 »m were added to 100 parts by weight of the above material for the primary phase. These compounds were mixed by a ball mill with a dispersing medium of ethanol for 48 hours. Thereafter, the mixture was dried so as to prepare sintering material powder.

Thereafter, around 5 parts by weight of a binder were added to the 100 parts by weight of the above starting powder for a sintered body and then a plate shape moulded body with dimensions of 50 mm long x 50 mm wide x 5 mm thick was produced at a moulding pressure of 1000 kg/cm². After the plate shape moulded body was degreased in a nitrogen gas atmosphere, the resultant moulded body was sintered in a nitrogen gas atmosphere at normal pressure at a temperature of 1850°C for 2 hours. Thereby, a sintered body with the primary phase of a sialon was obtained.

In addition, in comparison with the sintered body according to the present invention, a sialon type sintered body (comparison 1) was produced in the same conditions as the embodiment 1 except the amount of HfO₂ added was reduced to 0.5 parts by weight (outside the scope of the present invention).

The sintered body density (relative density) and the fracture toughness value K_{IC} for each sintered body produced were measured by micro indentation method. In the result, the sintered density of the sintered body according to the comparison 1 was as low as 88.0 % and the fracture toughness value K_{IC} thereof was also as low as 4.0 MPa m^{1/2}. In contrast, the sintered density of the sintered body according to the embodiment 1 was as high as 97.2 % and the fracture toughness value K_{IC} thereof was as high as 4.7 MPa m^{1/2}.

Thereafter, the sectional structure of the sintered body according to the embodiment 1 was observed by transmission type electron microscope. A photo taken by the transmission type electron microscope is shown in Fig. 1. In the figure, "H" represents HfO₂ . Other than SiC are sialon crystalline particles. As shown in Fig. 1, HfO₂ (H) is present at the triple point by the sialon crystalline particles and at the interface between the sialon crystalline particles and the SiC particles.

### Embodiments 2 to 8

Si₃N₄ power with an average particle diameter of 0.7 »m and Al₂O₃ powder with an average particle diameter of 0.9 »m were used with composition ratios shown in Table 1 so as to prepare starting materials for the primary phase.
Thereafter, HfO₂ powder with an average particle diameter of 0.9 »m and SiC powder with an average particle diameter of 0.5 »m was used to prepare material powder with composition ratios (parts by weight) shown in Table 1. Each material powder was used to produce a sialon type sintered body in the same condition as the embodiment 1.

In the comparison 2, material powder was produced without HfO₂ and then it was sintered by the hot press sintering method in a nitrogen gas atmosphere at a temperature of 1850°C for 1 hour.

The sintered body density and the fracture toughness value K_{IC} of each sialon type sintered body were measured in the same manner as the embodiment 1. The results are also shown in Table 1.

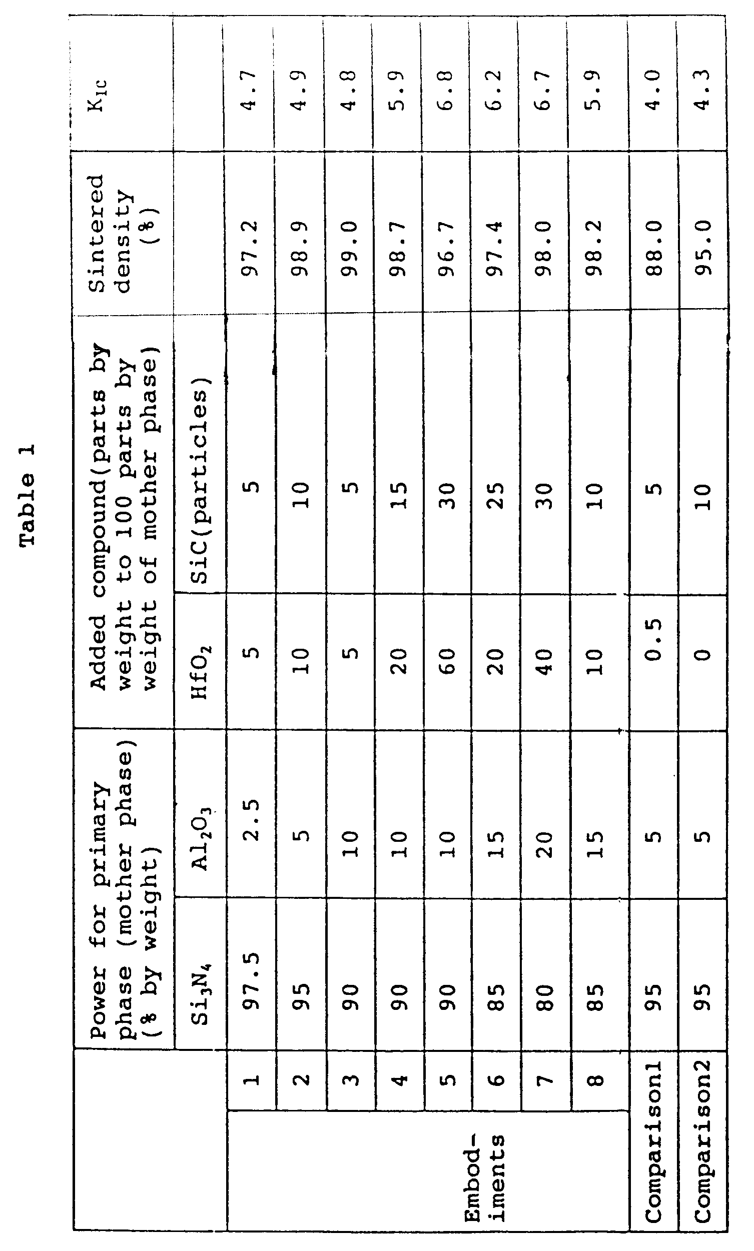

As shown in Table 1, when both HfO₂ and SiC were used, the sintered body according to each embodiment had high density. In addition, when a large amount of SiC was added, the sintered body had high density. Accordingly, the fracture toughness value K_{IC} was clearly improved.

Further, as a comparison 3, the sialon type sintered body was produced in the same manner as the embodiments except that Y₂O₃ powder was used instead of HfO₂ powder. This sialon type sintered body has almost the same sintered body density and the fracture toughness value K_{IC} as those of the embodiments. However, the high temperature strength (at 1300°C) was considerably reduced to be 400 MPa. The high temperature strength of the sialon type sintered body of the each embodiment was about 700 MPa.

### Embodiment 9

First, 10 % by weight of Al₂O₃ powder were added and mixed with Si₃N₄ powder with an average particle diameter of 0.7 »m. Thereafter, 100 parts by weight of a solution of Hf (OC₃H₇)₄ which were equivalent to those of HfO₂ (the amount of the solution of Hf (OC₃H₇)₄ is equivalent to 10 parts by weight of HfO₂ when Hf (OC₃H₇)₄ is converted to HfO₂) and 15 parts by weight of SiC powder with an average particle diameter of 0.5 »m were added to 100 parts by weight of the above mentioned mixture. They were mixed with a dispersing medium of ethanol for 24 hours. Thereafter, the resultant mixture was dried thereby to produce material powder.

After around 5 parts by weight of a binder were added to the 100 parts by weight of the above mentioned material powder, a plate shape moulded with dimensions of 50 mm long x 50 mm wide x 5 mm thick was produced at a moulding pressure of 1 ton/cm². Thereafter, the moulded body was degreased in a nitrogen gas atmosphere and then sintered in a nitrogen gas atmosphere at normal pressure at a temperature of 1850°C for 2 hours. Thereby, a sintered body with the primary phase of a sialon was obtained. Thereafter, under the same conditions, 100 pieces of the sintered bodies were produced.

In addition, as a reference example, 100 pieces of sialon type sintered bodies were produced in the same conditions as the embodiment 9 except that hafnium oxide powder was used instead of an alkoxide of hafnium.

The relative density, the high temperature strength by a three-point bending test, and the fracture toughness value K_{IC} were measured for each sintered body produced in the above manner. The results are shown Table 2.

**Table 2**

| | Embodiment 9 | Reference 1 |
|---|---|---|
| Average sintered body density (%) | 98.5 | 98.3 |
| Maximum and minimum values of sintered body density | 3.29 to 3.34 | 3.25 to 3.33 |
| Average strength of high temperature three-point bending testat 1300°C (MPa) | 680 | 660 |
| Maximum and minimum values of high temperature strength | 660 to 720 | 600 to 700 |
| Average fracture toughness value K_{IC} (MPa m^{1/2}) | 5.7 | 5.6 |
| Maximum and minimum values of fracture toughness | 5.3 to 5.9 | 5.0 to 5.9 |

As shown in Table 2, when hafnium alkoxide as a starting material of hafnium oxide is used, each characteristic can be further improved with small deviation thereof.

### Embodiment 10

First ,Si₃N₄ powder with an average particle diameter of 0.7 »m, Al₂O₃ powder with an average particle diameter of 0.9 »m, and AlN powder with an average particle diameter of 0.6 »m were prepared. These compounds were mixed so as to satisfy the composition of Si₅ Al₁ O₁ N₇ (z = 1) and powder for the primary phase was prepared.

10 parts by weight of HfO₂ powder with an average particle diameter of 1.6 »m and 15 parts by weight of SiC powder with an average particle diameter of 0.5 »m were added to 100 parts by weight of the powder for the primary phase. Thereafter, these compounds were mixed with a dispersing medium of ethanol by a ball mill for 48 hours. Thereafter, the mixture was dried to prepare arterial powder for sintered body.

Thereafter, around 5 parts by weight of a binder were added to 100 parts by weight of the above mentioned material powder for sintered body and then a plate shape moulded body with dimensions of 50 mm long x 50 mm wide x 5 mm thick was produced at a moulding pressure of around 1000 kg/cm². Thereafter, the moulded body was degreased in a nitrogen gas atmosphere. Thereafter, the resultant moulded body was heated in a nitrogen gas atmosphere of 5 kg/cm² at a rate of temperature increase of 15 C° /min until the temperature reached 1850 °C, held at this temperature for 2 hours, and then heated at a temperature of 1825°C for 20 hours. Thereby, a sintered body with the primary phase of a sialon was produced.

The structure of the sialon type sintered body produced in the above mentioned manner was observed by using the transmission type electron microscope. As the results, it was found that HfO₂ particles were precipitated in such a manner that they were mixed into crystalline particles of the sialon. Although the diameter of the HfO₂ particles was as large as around 50 »m, SiC particles were distributed therein. In addition, at the grain boundary of the sialon crystalline particles, the SiC particles were distributed. The average diameter of the SiC particles was around 1.5 »m.

In addition, the relative density of the above mentioned sintered body, the three-point bending strength at 1300°C thereof, and the fracture toughness value K_{IC} thereof were 98.3 %, 79 kgf/mm², and 6.7 MPa m^{1/2}, respectively.

### Embodiment 11 (comparative)

First, 10 % by weight of Al₂O₃ powder were added and mixed with Si₃N₄ powder with an average particle diameter of 0.7 »m. Thereafter, 4 parts by weight of a solution of Hf (OC₃H₇)₄ were added to 100 parts by weight of the above mentioned mixture and then mixed with a dispersing medium of ethanol for 48 hours. Thereafter, the resultant mixture was dried and then material mixture powder was obtained.

Thereafter, around 5 parts by weight of a binder were added to 100 parts by weight of the above mentioned material mixture powder so that the resultant mixture was granulated. Thereafter, a plate shape moulded body with dimensions of 50 mm long x 50 mm wide x 5 mm thick was produced at a moulding pressure of 1 ton/cm². Thereafter, the resultant moulded body was degreased in a nitrogen gas atmosphere and then sintered in a nitrogen gas atmosphere of 5kg/cm² at a temperature of 1850°C for 2 hours. Thereby, a sintered body with the primary phase of a sialon was produced. 100 pieces of the sintered bodies were produced in the same conditions.

In addition, as the comparison 4, 100 pieces of sialon type sintered bodies were produced in the same conditions as the comparative embodiment 11 except that hafnium oxide powder was used instead of hafnium alkoxide.

The relative density of each sialon type sintered body produced in the above mentioned manner, the high temperature strength by the three-point bending strength test thereof, and the fracture toughness value K_{IC} thereof were measured. The results are shown in Table 3.

**Table 3**

| | Embodiment 11 (comparative) | Comparison 4 |
|---|---|---|
| Average sintered body density (%) | 99.8 | 99.3 |
| Maximum and minimum values of sintered body density | 3.230 to 3.239 | 3.205 to 3.235 |
| Average strength of high temperature three-point bending test at 1300°C (MPa) | 880 | 810 |
| Maximum and minimum values of high temperature strength | 850 to 900 | 720 to 890 |
| Average rupture toughness value K_{IC} (MPa m^{1/2}) | 4.2 | 4.2 |
| Maximum and minimum values of rupture toughness | 4.0 to 4.6 | 3.9 to 4.7 |

As shown in Table 3, when hafnium alkoxide was used as a starting material of hafnium oxide, each characteristic could be improved with very small deviation thereof.

As was described in above embodiments, in the sintered bodies with the primary phase of sialon according to the present invention, by adding hafnium oxide, even if the amount of silicon carbide added is increased, the sintered bodies can be constructed with high density by non-pressurised sintering. Moreover, in comparison with a sintered body constructed with high density by a hot press process without adding hafnium oxide, the sintered bodies according to the present invention have high fracture toughness value. Thereby, sialon type sintered bodies with high fracture toughness value and high reliability can be produced by pressure-free sintering process suitable for mass production.

## Claims

1. A sialon type sintered body, comprising:
a primary phase containing in an amount of 90% or more by volume of said primary phase a sialon composition which consists of β prime sialon; and
a dispersion phase dispersed in said primary phase, said dispersion phase comprising 1 to 60 parts by weight of hafnium oxide and 5 to 30 parts by weight of silicon carbide per 100 parts by weight of said primary phase, said silicon carbide being present independently in the particle state.

2. A sintered body as claimed in claim 1, wherein said silicon carbide has an average particle diameter of 50 »m or less in said primary phase.

3. A sintered body as claimed in claim 2, wherein said hafnium oxide is present at the grain boundary of crystalline particles constituting said primary phase and at the interface between the particles of said silicon carbide and the crystalline particles constituting said primary phase.

4. A sintered body as claimed in any preceding claim, wherein the periphery of said silicon carbide is covered with said hafnium oxide.

5. A sintered body as claimed in any preceding claim, wherein part of said silicon carbide is dispersed in the crystalline particles of said hafnium oxide.

6. A method of producing sialon type sintered bodies according to any preceding claim, comprising the steps of: mixing 1 to 60 parts by weight of hafnium oxide powder, 5 to 30 parts by weight of silicon carbide powder, and 100 parts by weight of silicon nitride powder containing 2.5 to 20 % by weight of aluminium oxide powder; moulding said mixture powder into a desired shape; and sintering the resultant moulded body in a non-pressurised atmosphere.

7. A method as claimed in claim 6, wherein said hafnium oxide is derived from an organic compound which contains hafnium and which is liquid at ambient temperature.

8. A method as claimed in claim 7, in which the organic compound comprises at least one alkoxide of hafnium.

## Patentansprüche

1. Sinterkörper des Typs Sialon, mit:
einer Primärphase, die in einer Menge von 90% oder mehr des Volumens der Primärphase eine Sialon-Zusammensetzung enthält, die aus β-Primär-Sialon besteht; und
einer Dispersionsphase, die in der Primärphase dispergiert ist, wobei die Dispersionsphase 1 bis 60 Gewichtsteile Hafniumoxid und 5 bis 30 Gewichtsteile Siliziumcarbid pro 100 Gewichtsteile der Primärphase aufweist, wobei das Siliziumcarbid unabhängig im Teilchenzustand vorliegt.

2. Sinterkörper nach Anspruch 1, wobei das Siliziumcarbid in der Primärphase einen durchschnittlichen Teilchendurchmesser von 50 »m oder weniger hat.

3. Sinterkörper nach Anspruch 2, wobei das Hafniumoxid an der Korngrenze kristalliner Teilchen, die die Primärphase ausmachen, und an der Grenzfläche zwischen den Teilchen aus Siliziumcarbid und den kristallinen Teilchen, die die Primär-Phase ausmachen, vorliegt.

4. Sinterkörper nach einem der vorhergehenden Ansprüche, wobei die Peripherie des Siliziumcarbid mit dem Hafniumoxid bedeckt ist.

5. Sinterkörper nach einem der vorhergehenden Ansprüche, wobei ein Teil des Siliziumcarbids in den kristallinen Teilchen des Hafniumoxids dispergiert ist.

6. Verfahren zum Erzeugen von Sinterkörpern des Typs Sialon nach einem der vorhergehenden Ansprüche, mit den Schritten: Mischen von 1 bis 60 Gewichtsteilen Hafniumoxid-Pulver, 5 bis 30 Gewichtsteilen Siliziumcarbid-Pulver und 100 Gewichtsteilen von Siliziumnitrid-Pulver, das 2,5 bis 20 Gewichtsprozent Aluminiumoxid-Pulver enthält;
Formen des gemischten Pulvers in eine gewünschte Gestalt; und
Sintern des resultierenden geformten Körpers in einer nicht unter Druck stehenden Atmosphäre.

7. Verfahren nach Anspruch 6, wobei das Hafniumoxid von einer organischen Verbindung hergeleitet ist, die Hafnium enthält und die bei Umgebungstemperatur flüssig ist.

8. Verfahren nach Anspruch 7, wobei die organische Verbindung wenigstens ein Alkoxid von Hafnium aufweist.

## Revendications

1. Corps fritté du type "sialon" qui comprend :
une phase primaire contenant, dans une proportion égale ou supérieure à 90% en volume ou plus de ladite phase primaire, une composition de sialon qui consiste en sialon du type "B", et
une phase de dispersion dispersée dans cette phase primaire, ladite phase de dispersion comprenant de 1 à 60 parties en poids d'oxyde de hafnium et entre 5 et 30 parties en poids de carbure de silicium pour 100 parties en poids de ladite phase primaire, ledit carbure de silicium étant présent de manière indépendante à l'état particulaire.

2. Corps fritté tel que spécifié dans la revendication 1, caractérisé en ce que les particules composant ledit carbure de silicium ont un diamètre moyen égal ou inférieur à 50 um dans ladite phase primaire.

3. Corps fritté selon la revendication 2, caractérisé en ce que ledit oxyde de hafnium est présent à la limite des grains des particules cristallines constituant ladite phase primaire et à l'interface entre les particules dudit carbure de silicium et les particules cristallines constituant ladite phase primaire.

4. Corps fritté selon l'une quelconque des revendications précédentes, caractérisé en ce que le pourtour dudit carbure de silicium est couvert avec ledit oxyde de hafnium.

5. Corps fritté selon l'une quelconque des revendications précédentes, caractérisé en ce qu'une partie dudit carbure de silicium est dispersée dans les parties cristallines dudit oxyde de hafnium.

6. Procédé pour produire des corps frittés du type sialon, selon l'une quelconque des revendications précédentes, caractérisé en ce qu'on mélange, en poids, entre 1 et 60 parties de poudre d'oxyde de hafnium, de 5 à 30 parties en poids de poudre de carbure de silicium avec 100 parties en poids de poudre de nitrure de silicium contenant entre 2,5 et 20% en poids de poudre d'oxyde d'aluminium;
on donne à ce mélange, par moulage, la forme désirée ; et
on soumet le corps moulé résultant à un traitement de frittage dans une atmosphère non-pressurisée.

7. Procédé selon la revendication 6, caractérisé en ce que l'oxyde de hafnium utilisé provient d'un composé organique contenant du hafnium et qui est liquide à la température ambiante.

8. Procédé selon la revendication 7, caractérisé en ce que le composé organique comprend, au moins, un alcoxyde de hafnium.
